# EUROPEAN PATENT APPLICATION

(11) **EP 1 176 353 A1**
(43) Date of publication of application: **30.01.2002**
(21) Application number: 01202781.9
(22) Date of filing: 20.07.2001
(51) Int. Cl.: F16L 37/00

(54) **Built-in box for rapid coupling of a gas pipe**

(30) Priority: 26.07.2000 NL 1015813
(71) Applicant: Jacobs, Robertus Andreas Anna Martinus, 9712 EE Groningen (NL)
(72) Inventor: Jacobs, Robertus Andreas Anna Martinus, 9712 EE Groningen (NL)
(74) Representative: Dokter, Hendrik Daniel

(57) **Abstract**

Built-in box for a rapid coupling element (4) for a gas pipe, comprising a housing (1,19) for building into a wall and having a first opening (2,20) and a second opening (3) to be directed toward the surface of the wall for receiving in this housing a rapid coupling element which comprises an inlet part (5) and a cylindrical outlet part (6) to be directed toward the surface of the wall, wherein the inlet part can be coupled via the first opening to a gas supply pipe and the outlet part can be coupled via the second opening to a connecting nipple of a connecting pipe, for instance a flexible connecting hose, in addition to positioning means (7,26) for placing the outlet part relative to the surface of the wall into a position suitable for coupling to the connecting nipple, wherein the inlet part is directed transversely of the outlet part and the positioning means engage on the cylindrical outlet part.

## Description

The invention relates to a built-in box for a rapid coupling element for a gas pipe, comprising a housing for building into a wall and having a first opening and a second opening to be directed toward the surface of the wall for receiving in this housing a rapid coupling element which comprises an inlet part and a cylindrical outlet part to be directed toward the surface of the wall, wherein the inlet part can be coupled via the first opening to a gas supply pipe and the outlet part can be coupled via the second opening to a connecting nipple of a connecting conduit, for instance a flexible connecting hose, in addition to positioning means for placing the outlet part relative to the surface of the wall into a position suitable for coupling to the connecting nipple.

Such a built-in box is known from the Netherlands patent application no. 7211921. The known built-in box comprises a housing which is provided with a conical attachment for receiving a gas supply pipe which debouches in the bore of a connecting plate held fixedly by three threaded rods and provided with a connecting flange, which plate lies against the underside of the housing. The connecting part in the known built-in box is coupled to the connecting flange of the connecting plate by means of a flange sealed with a sealing ring. The gas supply pipe is connected to the connecting plate by soldering. The assembly of connecting part and connecting plate is displaceable in the housing relative to the wall using ring nuts which are displaceable along the threaded rods and which are provided with protrusions or the like for engaging an adjusting tool. The connecting plate is provided with a flange with holes fitting round the threaded rods for clamping the flange between the adjusting nuts and locking nuts co-acting with the threaded rods.

The known built-in box has the drawback that it is assembled from a relatively large number of components. The assembling of the components, soldering of the gas supply pipe to the connecting plate and positioning of the connecting plate using three ring nuts which are difficult to access is labour-intensive and therefore costly.

It is an object of the invention to provide a built-in box which is assembled from a minimum number of inexpensive components which are simple to assemble.

It is a further object to provide a built-in box which can be coupled to a gas supply pipe and built into an outside or inside wall in simple and cost-saving manner.

These objectives are achieved, and other advantages gained, with a built-in box of the type stated in the preamble, wherein according to the invention the inlet part is directed transversely of the outlet part and the positioning means engage on the cylindrical outlet part.

Since, other than in the prior art, the rapid coupling element comprises an inlet part directed transversely of the outlet part, there is no longer any need for axial coupling of the inlet part to a connecting plate provided with a lateral bore for receiving a gas supply pipe. Because the positioning means engage on the cylindrical outlet part, it is possible when positioning the outlet part to suffice with only one adjustment operation where in the prior art three adjusting nuts have to be set.

In one embodiment the first opening is a recess in the housing extending from the second opening.

This embodiment provides the option of already building the housing into an outside or inside wall before the gas supply pipe is arranged, wherein it is not necessary for the rapid coupling element to be already fitted in the housing. The rapid coupling for fitting can be fastened to the gas supply pipe, for instance by soldering or screwing, after the latter has been placed into the outside or inside wall.

In one embodiment of a built-in box according to the invention the adjusting means comprise a clamping ring which fits round the outlet part and is adjustable therealong, and a coupling plate which is connected to the clamping ring and which likewise fits round the outlet part and can be coupled to the housing.

In a subsequent embodiment the outlet part is provided with a first screw thread and the adjusting means comprise an adjusting ring which fits precisely round the outlet part and which is provided on its inner periphery with a second screw thread co-acting with the first screw thread, which adjusting ring can be coupled to the housing.

The adjusting ring is for instance manufactured from metal or from plastic.

The housing according to the invention is preferably provided with a cover part fitting round the outlet part.

In one embodiment the cover part comprises a closing flap for the outlet part, whereby this outlet part is concealed from view when not in use, and is otherwise protected from fouling and damage.

A housing for a built-in box according to the invention is for instance manufactured from metal or from plastic.

The invention will be elucidated hereinbelow on the basis of embodiments and with reference to the annexed drawings.

In the drawings
Fig. 1 shows a cut-away perspective view of a first embodiment of a built-in box according to the invention, and
Fig. 2 shows a cut-away perspective view of a second embodiment of a built-in box according to the invention.

Corresponding components are designated in the figures with the same reference numerals.

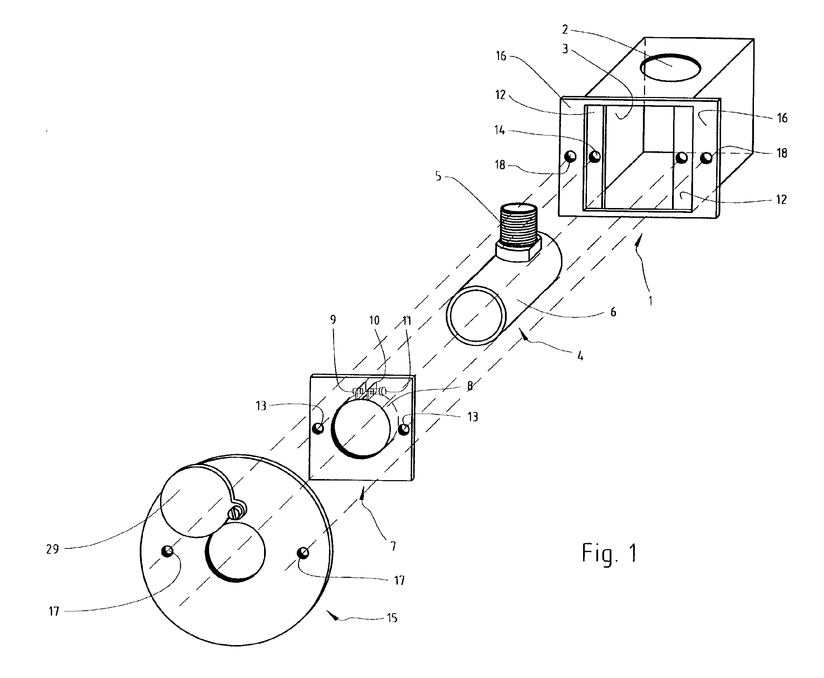

Fig. 1 shows a practically cube-shaped housing 1 for building into a wall which has a first opening 2 on its upper side and a second opening 3 on the front side (to be directed toward the surface of the wall), a rapid coupling element 4 embodied as kneebend and having an inlet part 5 and a cylindrical outlet part 6 placed transversely thereof, wherein after fitting of rapid coupling element 4 in housing 1 the inlet part 5 can be coupled via the first opening 2 to a gas supply pipe (not shown) and the outlet part 6 can be coupled via the second opening 3 to a connecting nipple of a connecting conduit (not shown). Rapid coupling element 4 is fixed into housing 1 using a coupling plate 7 which fits precisely round outlet part 6 and which is fixedly connected to an open clamping ring 8, of which the free ends 9, 10 are tightened round outlet part 6 using a screw 11. Coupling plate 7 is fixed to housing 1 with screws through holes 13, the housing containing for this purpose two posts 12 provided with holes 14 corresponding with holes 13 and provided with a screw thread. After housing 1 has been built into a wall and rapid coupling element 4 has been fitted, the housing can be covered by a cover part 15 which is fastenable to side parts 16 with screws through corresponding holes 17, 18 and which fits round outlet part 6 and is provided with a closing flap 29 for outlet part 6.

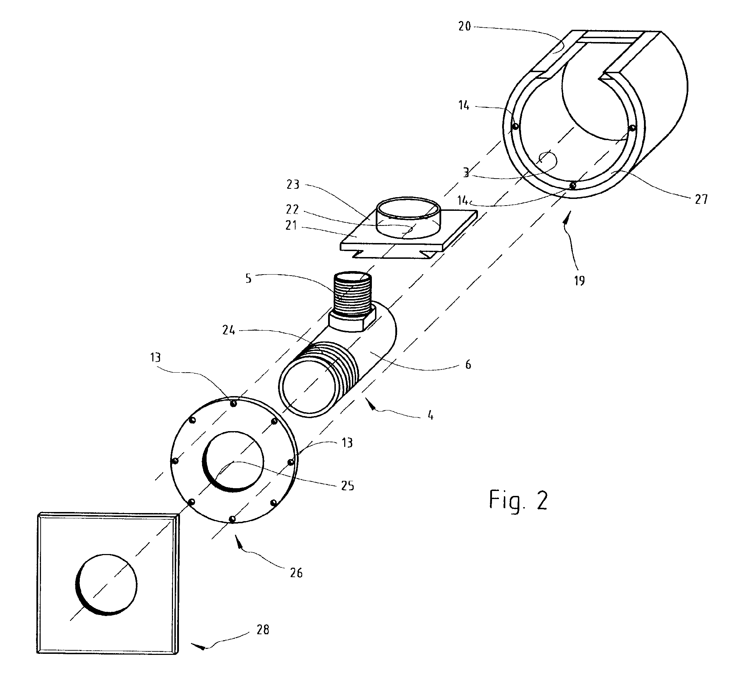

Fig. 2 shows a cylindrical housing 19 of a suitable plastic material for building into a wall which has on its upper side a first opening 20 formed by a recess which extends from a second opening 3 on the front side of housing 19. Recess 20 is closable by a slide-in cover 21 which is provided with an opening 22 and a pipe piece 23 for receiving an inlet part 5 of a rapid coupling element 4. Outlet part 6 of rapid coupling element 4 is provided with a screw thread 24 corresponding with a screw thread 25 in the inner periphery of an optionally metal or plastic adjusting ring 26 which fits precisely onto a recessed peripheral edge 27 of housing 19. Adjusting ring 26 is fastened onto peripheral edge 27 with screws through holes 13, the edge 27 being provided for this purpose with holes 14 corresponding to holes 13 and provided with a screw thread. After housing 19 has been built into a wall and rapid coupling element 4 has been fitted, the housing can be covered by a cover part 28 fastenable in known manner and fitting round outlet part 6. In the built-in situation the position of rapid coupling element 4 relative to the front side of housing 19 is determined by the position of adjusting ring 26 on the outlet part 6 of rapid coupling element 4.

It is noted that the above described embodiments serve to elucidate the invention and not to limit the scope thereof.

The built-in box according to the invention can, with simple modifications, be made suitable for instance as surface-mounted box. The housing of such a surface-mounted box is arranged against an outside or inside wall with the first opening directed toward this outside or inside wall, so that the second opening is directed in a plane perpendicularly of this outside or inside wall for the purpose of coupling a connecting nipple of a connecting conduit to a rapid coupling element in this housing.

## Claims

1. Built-in box for a rapid coupling element (4) for a gas pipe, comprising a housing (1, 19) for building into a wall and having a first opening (2, 20) and a second opening (3) to be directed toward the surface of the wall for receiving in this housing (1, 19) a rapid coupling element (4) which comprises an inlet part (5) and a cylindrical outlet part (6) to be directed toward the surface of the wall, wherein the inlet part (5) can be coupled via the first opening (2, 20) to a gas supply pipe and the outlet part (6) can be coupled via the second opening (3) to a connecting nipple of a connecting conduit, for instance a flexible connecting hose, in addition to positioning means (7, 26) for placing the outlet part (6) relative to the surface of the wall into a position suitable for coupling to the connecting nipple, **characterized in that** the inlet part (5) is directed transversely of the outlet part (6) and the positioning means (7, 26) engage on the cylindrical outlet part (6).

2. Built-in box as claimed in claim 1, **characterized in that** the first opening is a recess (20) in the housing (19) extending from the second opening (3).

3. Built-in box as claimed in either of the claims 1-2, **characterized in that** the adjusting means comprise a clamping ring (8) which fits round the outlet part (6) and is adjustable therealong, and a coupling plate (7) which is connected to the clamping ring and which likewise fits round the outlet part (6) and can be coupled to the housing.

4. Built-in box as claimed in either of the claims 1-2, **characterized in that** the outlet part (6) is provided with a first screw thread (24) and the adjusting means comprise an adjusting ring (26) which fits precisely round the outlet part and which is provided on its inner periphery with a second screw thread (25) co-acting with the first screw thread (24), which adjusting ring (26) can be coupled to the housing (19).

5. Built-in box as claimed in claim 4, **characterized in that** the adjusting ring (26) is manufactured from metal.

6. Built-in box as claimed in claim 4, **characterized in that** the adjusting ring (26) is manufactured from plastic.

7. Built-in box as claimed in any of the claims 1-6, **characterized in that** it is provided with a cover part (15, 28) fitting round the outlet part (6).

8. Built-in box as claimed in claim 7, **characterized in that** the cover part (15) comprises a closing flap (29) for the outlet part (6).

9. Built-in box as claimed in any of the claims 1-8, **characterized in that** the housing (1, 19) is manufactured from metal.

10. Built-in box as claimed in any of the claims 1-8, **characterized in that** the housing (1, 19) is manufactured from plastic.
